# FASCICULE DE BREVET EUROPEEN

(11) **EP 1 047 142 B1**
(45) Date de publication et mention de la délivrance du brevet: **19.10.2016**
(21) Numéro de dépôt: 00401129.2
(22) Date de dépôt: 21.04.2000
(51) Int. Cl.: H01M 2/38, B01F 3/04

(54) **Dispositif de brassage d'électrolyte pour batterie d'accumulateurs électriques**
Vorrichtung zum Rühren des Elektrolyten einer elektrischen Akkumulatorenbatterie
Device for stirring the electrolyte of an electric accumulator battery

(30) Priorité: 23.04.1999 FR 9905197
(43) Date de publication de la demande: 25.10.2000
(73) Titulaire: Oldham France S.A., 62000 Arras Cedex (FR)
(72) Inventeur: Dreulle, Claude Maurice Pierre, 62217 Beaurains (FR); Lenain, Pierre Georges Gérard, 62000 Arras (FR)
(74) Mandataire: Lavoix

(56) Documents cités:
- EP-A- 0 585 780
- EP-A- 0 712 655
- DE-A- 3 402 819
- DE-C- 88 241
- US-A- 2 389 488
- US-A- 3 116 347
- PATENT ABSTRACTS OF JAPAN vol. 007, no. 062 (E-164), 15 mars 1983 (1983-03-15) -& JP 57 208064 A (NIHON DENCHI KK), 21 décembre 1982 (1982-12-21)
- PATENT ABSTRACTS OF JAPAN vol. 005, no. 109 (E-065), 15 juillet 1981 (1981-07-15) -& JP 56 050060 A (SHIN KOBE ELECTRIC MACH CO LTD), 7 mai 1981 (1981-05-07)
- PATENT ABSTRACTS OF JAPAN vol. 007, no. 062 (E-164), 15 mars 1983 (1983-03-15) -& JP 57 210564 A (SHINKOUBE DENKI KK), 24 décembre 1982 (1982-12-24)

## Description

La présente invention se rapporte à un dispositif de brassage d'électrolyte pour batterie d'accumulateurs électriques.

Dans l'état de la technique, un tel dispositif de brassage comprend un ensemble de buses destinées chacune à être insérée dans un accumulateur de manière à être immergée dans l'électrolyte emplissant l'accumulateur et à être raccordée à une source d'alimentation en gaz.

US 2,389,488 divulgue un dispositif de brassage comprenant un ensemble de buses destinées à être utilisées dans une installation de décapage des métaux.

Afin de délivrer des débits de gaz relativement constants d'un accumulateur à l'autre, c'est-à-dire pour homogénéiser le débit de gaz délivré en sortie des buses, chaque buse est dotée d'un rétrécissement de section.

Pour leur alimentation en gaz, les buses sont connectées à un réseau de conduits d'alimentation, eux-mêmes connectés à une pompe située par exemple sur le chargeur de la batterie.

A ce jour, le rétrécissement de section est formé au voisinage de la zone de raccordement des buses au réseau de conduits.

Les dispositifs de brassage de ce type permettent, au cours de la charge, une homogénéisation rapide de la densité de l'électrolyte et donc une réduction du temps de charge. On augmente ainsi le nombre de cycles de charge et de décharge quotidiens et une économie non négligeable de la quantité de courant nécessaire à la recharge de la batterie.

En outre, on augmente considérablement la durée de vie de la batterie dans la mesure où le brassage permet un refroidissement efficace de la batterie.

Toutefois, ce type de dispositif de brassage présente un inconvénient majeur, dans la mesure où l'on observe souvent une remontée de l'électrolyte le long de la buse, jusqu'au réseau de conduits.

Le but de l'invention est de pallier cet inconvénient.

Elle a donc pour objet un dispositif de brassage du type précité, caractérisé en ce que le rétrécissement de section est formé dans la zone d'extrémité libre de chaque buse.

On évite ainsi toute remontée d'électrolyte, dans la mesure où, en amont du rétrécissement de section, en considérant le sens d'écoulement du gaz, le gaz dans la buse est en surpression par rapport au gaz circulant dans le rétrécissement de section.

Les différents modes de réalisation du dispositif d'agitation selon l'invention sont définis par les revendications.

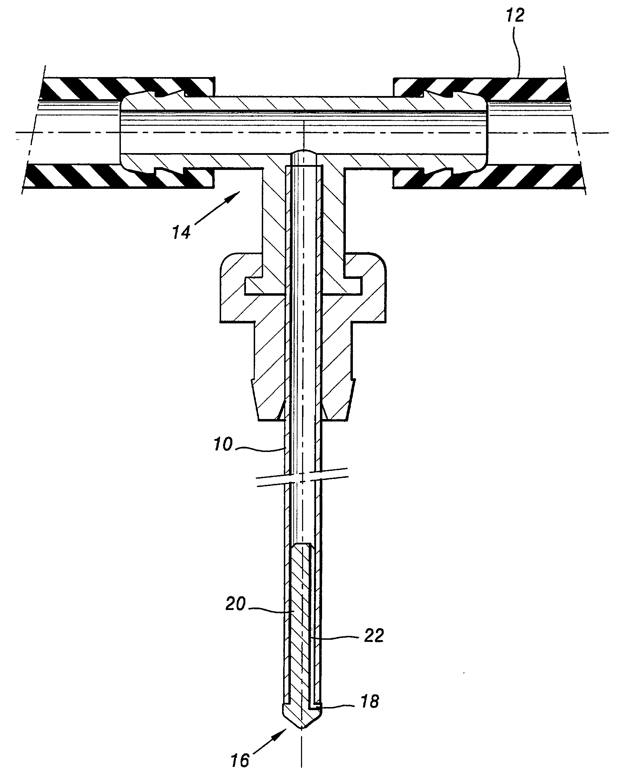

D'autres caractéristiques et avantages ressortiront de la description suivante, donnée uniquement à titre d'exemple, et faite en référence à la figure unique annexée montrant une vue en coupe longitudinale d'une buse de brassage d'un dispositif conforme à l'invention.

Le dispositif de brassage d'électrolyte conforme à l'invention comporte un ensemble de buses telles que 10 raccordées à un réseau de conduits 12 d'alimentation des buses en gaz, ces conduits étant connectés à une pompe d'alimentation en gaz, par exemple de l'air.

Sur la figure, seule une buse a été représentée. On conçoit toutefois que le dispositif comporte un ensemble de telles buses identiques, prévues en un nombre correspondant au nombre d'accumulateurs de la batterie, par exemple vingt-quatre.

Chaque buse 10 a une forme générale cylindrique et s'insère, en fonctionnement, dans un accumulateur, de manière à être immergée dans l'électrolyte qu'il contient.

Les buses 10 sont raccordées au réseau de conduits 12 par l'intermédiaire de raccords 14 en T de type classique.

En fonctionnement, c'est-à-dire lors de la charge de la batterie, le conduit 12 alimente la buse 10 en gaz sous pression, lequel gaz est injecté dans l'électrolyte pour procéder à un brassage et ainsi une homogénéisation de la densité de l'électrolyte.

Pour homogénéiser le débit de gaz délivré en sortie des buses 10, c'est-à-dire pour que les buses délivrent, en sortie, un débit de gaz identique, l'extrémité libre 16 ou chaque buse, c'est-à-dire l'extrémité insérée dans l'électrolyte, est dotée d'un rétrécissement de section 18 générant une perte de charge dans le gaz.

De préférence, chaque buse a une longueur comprise entre 200 et 500 mm et un diamètre extérieur de l'ordre de 3 mm. Le rétrécissement de section 18, quant à lui, définit un passage ayant une dimension sensiblement égale à 0,5 mm. En excluant le rétrécissement 18, la section interne des buses a, quant à elle, une dimension inférieure à la section interne des conduits 12.

Comme on le voit sur la figure, par exemple, le rétrécissement de section est réalisé au moyen d'une pièce rapportée 20 délimitant avec la paroi interne de la buse 10 un canal 22 calibré d'écoulement de gaz.

Afin d'éviter une obstruction de ce canal, ce dernier a une coupe longitudinale en forme de L.

Ainsi, il débouche vers l'extérieur selon une direction perpendiculaire à l'axe général de la buse, de sorte que le gaz est projeté de façon radiale. On évite ainsi que des impuretés présentes dans le fond de l'accumulateur ne viennent obstruer la buse 10.

On notera que la buse 10 et la pièce rapportée 20 sont, de préférence, réalisées en matière plastique, par exemple en PVC, en polypropylène, en polyéthylène, ..., c'est-à-dire en un matériau insensible à l'acide sulfurique.

Le rétrécissement de section peut également être réalisé en conformant la buse elle-même, c'est-à-dire lors du moulage, en réalisant un orifice de sortie calibré.

Dans ce cas, l'orifice de sortie peut également être réalisé de manière que son axe s'étende de façon perpendiculaire à l'axe général de la buse 10.

On conçoit que l'invention qui vient d'être décrite, qui utilise des buses dotées d'un orifice de sortie calibré, permet d'éviter toute remontée d'électrolyte dans la buse.

Les buses ayant un diamètre interne inférieur à celui des conduits, la vitesse d'écoulement du gaz s'élève dans les buses et sa pression baisse en conséquence.

Par ailleurs, les dimensions de la section interne du canal 22 étant inférieures à celles de la section interne du reste de la buse, la vitesse du gaz dans cette dernière est inférieure à la vitesse du gaz dans le canal 22.

On crée donc, dans le gaz circulant dans la buse une surpression par rapport au gaz circulant dans le canal 22 et une souspression par rapport au gaz circulant dans les conduits 12 et on évite ainsi toute remontée d'électrolyte.

## Revendications

1. Dispositif de brassage d'électrolyte pour batterie d'accumulateurs électriques, comportant un ensemble de buses (10) destinées chacune à être insérée dans un accumulateur de manière à être immergée dans l'électrolyte remplissant l'accumulateur et à être raccordée à une source d'alimentation en gaz, chaque buse étant dotée d'un rétrécissement de section (18) pour homogénéiser le débit de gaz délivré en sortie des buses, le rétrécissement de section étant formé dans la zone d'extrémité libre (16) de chaque buse,
**caractérisé en ce que** l'axe de l'orifice de sortie de chaque buse s'étend perpendiculairement à l'axe de la buse,
**en ce que** le rétrécissement de section est formé au moyen d'une pièce (20) rapportée insérée dans l'extrémité libre (16) de chaque buse et délimitant avec la paroi interne de la buse un canal calibré (22) d'écoulement de gaz, et
**en ce que** la pièce (20) rapportée délimite avec la paroi interne de la buse un canal (22) en forme de L débouchant perpendiculairement à l'axe général de la buse.

2. Dispositif selon la revendication 1, **caractérisé en ce que** le rétrécissement de section est formé par calibrage de l'orifice de sortie de la buse (10).

3. Dispositif selon l'une quelconque des revendications 1 ou 2, **caractérisé en ce que** le rétrécissement de section (18) comporte un diamètre utile sensiblement égal à 0,5 mm.

## Patentansprüche

1. Vorrichtung zum Vermischen von Elektrolyt für elektrische Akkumulator-Batterien, aufweisend eine Menge von Düsen (10), wobei jede dazu vorgesehen ist, in einen Akkumulator auf die Art eingeführt zu werden, dass sie in das Elektrolyt, das den Akkumulator füllt, eintaucht und dass sie mit einer Gas-Versorgung verbunden ist, wobei jede Düse eine Verjüngung des Querschnitts aufweist, um die Abgabe des am Ausgang der Düsen gelieferten Gases zu homogenisieren, wobei die Verjüngung des Querschnitts in einem Bereich des freien Endes (16) jeder Düse gebildet ist,
dadurch charakterisiert, dass die Achse der Ausgangsöffnung von jeder Düse sich im rechten Winkel zu der Achse der Düse erstreckt,
dadurch, dass die Verjüngung des Querschnitts mittels eines eingebrachten Teils (20) gebildet ist, das in das freie Ende (16) jeder Düse eingeführt ist und mit der Innenwand der Düse einen kalibrierten Gasströmungskanal (22) begrenzt, und dadurch, dass das eingebrachte Teil (22) mit der Innenwand der Düse einen Kanal (22) mit einer L-Form bildet, der im rechten Winkel zu der Hauptachse der Düse mündet.

2. Vorrichtung gemäß Anspruch 1, dadurch charakterisiert, dass die Verjüngung des Querschnitts durch eine Kalibrierung der Ausgangsöffnung der Düse (10) gebildet ist.

3. Vorrichtung gemäß einem der Ansprüche 1 oder 2, dadurch charakterisiert, dass die Verjüngung des Querschnitts (18) einen Nutz-Durchmesser im Wesentlichen gleich 0,5mm aufweist.

## Claims

1. A device for stirring the electrolyte of an electric accumulator battery, comprising a set of nozzles (10) each intended to be inserted into an accumulator so as to be immersed in the electrolyte filling the accumulator and to be connected to a gas supply source, each nozzle being provided with a narrowing section (18) for homogenising the gas flow delivered at the output of the nozzles, said narrowing section being formed in the free end (16) area of each nozzle, **characterised in that** the axis of the outlet port of each nozzle extends perpendicular to the axis of the nozzle, **in that** said narrowing section is formed by means of an attachment (20) inserted into the free end (16) of each nozzle and demarcating a calibrated gas flow channel (22) with the inner wall of the nozzle, and **in that** said attachment (20) demarcates an L-shaped channel (22) with the inner wall of the nozzle, which channel opens out perpendicular to the general axis of the nozzle.

2. The device according to claim 1, **characterised in that** said narrowing section is formed by calibrating the outlet port of the nozzle (10).

3. The device according to claim 1 or 2, **characterised in that** said narrowing section (18) comprises a useful diameter that is substantially equal to 0.5 mm.
